# EUROPEAN PATENT APPLICATION

(11) **EP 0 986 191 A2**
(43) Date of publication of application: **15.03.2000**
(21) Application number: 99307044.0
(22) Date of filing: 03.09.1999
(51) Int. Cl.: H04B 3/56

(54) **Filter**

(30) Priority: 03.09.1998 GB 9819239; 21.09.1998 GB 9820564
(71) Applicant: Nor. Web Dpl Limited, Slough, Berkshire SL1 4DX (GB)
(72) Inventor: Brown, Paul Anthony, Kendal, Cumbria LA9 6EA (GB); Dickinson, John, Burnley, Lancashire BB11 3PR (GB)
(74) Representative: Hackney, Nigel John

(57) **Abstract**

The present invention provides communications apparatus for use with an electricity distribution and/or power transmission network, including a low pass filter portion for allowing, in use, a low frequency mains electricity power signal to pass from the network and a coupling element for input and/or removal of a telecommunication signal from the network wherein the low pass filter portion and the coupling element are located in or are attached to respectively separate items of equipment.

By distributing the high and low pass filter elements (i.e. the coupling element and the low pass filter portion) in this way it is possible to include the elements within existing items of utility and/or customer electricity distribution network equipment thereby reducing costs.

There may be more than one low pass filter portion and preferably the low pass filter portion(s) are located in one or more elements of the equipment used to connect a consumers premises electricity network to the mains electricity network.

## Description

The present invention relates to the propagation of telecommunication signals over what is generally termed a "mains" electricity network i.e. a power transmission and/or distribution network. In particular, the present invention relates to a filter for preventing unwanted telecommunication signals from entering or leaving consumers premises connected to the network or other selected areas of or connected to the network.

The applicant has previously described inventions relating to this area in published patent applications; WO94/09572, WOP95/29536, WO95/29537, WO96/07245, WO98/19398 the disclosures of which are incorporated herein by reference. In particular, the applicant has previously described the use of a "conditioning unit" which, in one of its simplest forms, is suitably connected high and low pass filters which, when connected to the network, in one example the low pass filter acts to prevent high frequency telecommunication signals from entering a consumers premises and the high pass filter allows the high frequency telecommunication signals to be input onto and received from the network. Typically, these two filter components are combined in a single unit, called the "conditioning unit", as described in WO94/09572.

The cost of producing such a conditioning unit may in some circumstances be high and therefore if it is desired to equip a large number of, for example, customers premises the overall cost could be substantial. The present invention aims to provide a simpler unit which can help to reduce costs.

Accordingly, in a first aspect, the present invention provides communications apparatus for use with an electricity distribution and/or power transmission network, including a low pass filter portion for allowing, in use, a low frequency mains electricity power signal to pass from the network and a coupling element for input and/or removal of a telecommunication signal from the network wherein the low pass filter portion and the coupling element are located in or are attached to respectively separate items of equipment.

By distributing the high and low pass filter elements (i.e. the coupling element and the low pass filter portion) in this way it is possible to include the elements within existing items of utility and/or customer electricity distribution network equipment thereby reducing costs.

There may be more than one low pass filter portion and preferably the low pass filter portion(s) are located in one or more elements of the equipment used to connect a consumers premises electricity network to the mains electricity network.

Suitable items of equipment in which the high pass filter (coupling element) could be incorporated are any or all of: an electricity meter; a circuit breaker; a consumers distribution unit; and an anti-tamper block or device.

In a further aspect, the present invention provides apparatus for connecting a consumers premises electricity network to a mains electricity network in which at least one component of the apparatus includes a low pass filter for allowing, in use, low frequency mains electricity signals to pass from the mains electricity network to the consumers network. The item of equipment may preferably be one or more of; an anti-tamper block, and an electricity meter, a circuit breaker, or a consumers distribution unit. Preferably, the item of equipment does not also include any coupling unit for coupling telecommunication signals to/from the network.

In a further aspect, the present invention provides the incorporation into an item of equipment to be connected to a mains electricity network of a low pass filter portion (preferably without any other e.g. high pass filter element) in order to prevent or reduce, in use, high frequency telecommunication signals from entering the item of equipment. The item of equipment may be an item of street furniture such as a cable TV cabinet or a street light.

As is well known to those in the electricity supply industry, some consumers will go to great lengths to obtain electricity without paying for it, often with little regard for their personal safety. It is known for consumers to try to make a connection onto cables extending between their consumer cut-out and the meter. In an attempt to prevent such practices, it is common to provide an anti-tamper block. This is conventionally nothing more than a block of strong material against which the meter and the consumer cut-out abut, and through which the cables pass to provide a physical barrier preventing access to the cables.

In some circumstances, there may be a requirement to provide a low-pass filter to isolate a consumer's power supply from communication signals. The present inventor has realised that the anti-tamper block can provide a convenient location for such a low-pass filter.

In another of its aspects, the invention provides an anti-tamper block for an electrical supply installation, the anti-tamper block comprising conductors projecting from the block for carrying electrical power supply current there being a filter enclosed within the block for inhibiting passage of communications signals in the conductors.

This aspect of the invention permits installation of a low-pass filter using conventional procedures with which installation engineers are already familiar, these procedures being substantially the same as those followed to install an entirely conventional anti-tamper block.

An anti-tamper block embodying the invention preferably is constructed as a sealed unit, the filter being completely and permanently enclosed within it.

Embodiments of the present invention will now be described, by way of example only, with reference to the accompanying drawings in which:

Figure 1 shows a schematic diagram of a "conditioning unit" according to the prior art.

Figure 2 shows a typical UK electricity supply connection incorporating an embodiment of the present invention.

Figure 3 shows a schematic diagram of an anti-tamper block according to an embodiment of the present invention.

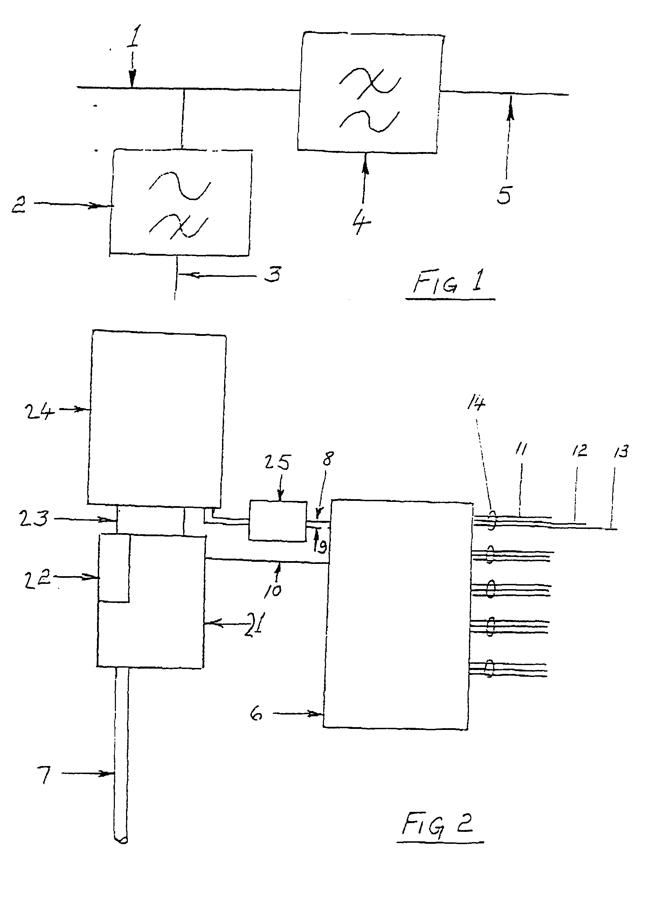

Figure 1 shows a schematic diagram of a prior art conditioning unit consisting of two elements: high pass filter 2 and low pass filter 4. These two elements are typically located in a single unit. A mains electricity power network 1 is connected to a subscribers network 5 via low pass filter 4; similarly, the mains network 1 is connected to/from high frequency telecommunication signals via high pass filter 2.

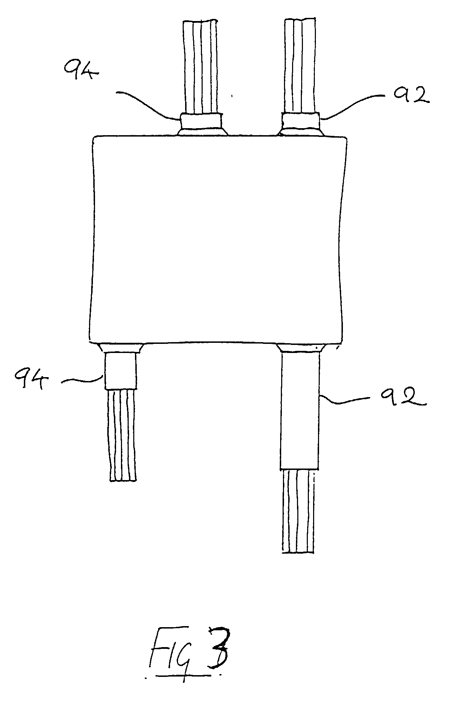

Figure 2 shows a schematic diagram of a typical UK electricity supply termination at a customers premises. The mains electricity supply cable 7 is connected to a cut out unit 21, a part 22 of which is a high rupture capacity fuse and fuse carrier. Between the electricity meter 24 and the cut out unit 21 is an anti-tamper block 23. The meter 24 is connected via a isolation switch or circuit breaker 25 to a customers distribution unit 6. Line and neutral conductors (8 and 9) run from the meter 24 to the consumers unit 6 and an earth conductor 10 runs directly from the consumer unit 6 to the cut out unit 21. Various electricity circuits (including conductors 11, 12, 13) run from the consumers unit 6 within the consumers premises.

A low pass filter element according to the present invention may be included at any suitable point in any of the components of figure 2. Particularly suitable points might be in the anti-tamper block 21 (as shown in Figure 3), the electricity meter 24, the circuit breaker 25 or the consumers unit 6 or the various outputs (e.g. filter 14) of the consumers unit 6.

By adopting such a distributed approach to "conditioning" of the power line telecommunications network, premises that do not wish to receive telecommunication signals may still be provided with low pass filter elements, if necessary, in order to reduce conducted emissions within the premises and a result minimise the radiation from any above ground wiring within the premises. This reduces cost, as the non-telecommunication subscriber premises do not require high pass filter element (coupling element).

As shown in Figure 3, the anti-tamper block 23 may include a moulded block of tough rubber or plastic material. A pair of electrical power cables 92,94 extend through the block such that portions of the cables project from opposite faces of it. End portions of the cables 92,94 are stripped of insulation such that they can be connected to the neutral terminal block 20 and to the second socket component 28 within the cutout, and to appropriate connection points within the meter 6 to convey electrical power to the meter. The cutout 2 and the meter 6 are mounted to abut closely against the anti-tamper block to inhibit any attempt to gain unauthorised access to the cables 92,94.

Within the block there is contained a low-pass electrical filter (not shown) which largely blocks passage of communication signals but presents little impedance to the much lower frequency of AC mains. The filter can be of any suitable design, for example, it may be as described in published UK patent application No. 2272350.

The above description is given by way of example only and modifications will be apparent to those skilled in the art.

## Claims

1. Communications apparatus for use with an electricity distribution and/or power transmission network, including a low pass filter portion for allowing, in use, a low frequency mains electricity power signal to pass from the network and a coupling element for input and/or removal of a telecommunication signal from the network wherein the low pass filter portion and the coupling element are located in or are attached to respectively separate items of equipment.

2. Communication apparatus according to claim 1 wherein the low pass filter portion and preferably the low pass filter portion(s) are located in one or more elements of the equipment used to connect a consumers premises electricity network to the mains electricity network including:
any or all of: an electricity meter; a circuit breaker; a consumers distribution unit; and an anti-tamper block or device.

3. Apparatus for connecting a consumers premises electricity network to a mains electricity network in which at least one component of the apparatus includes a low pass filter for allowing, in use, low frequency mains electricity signals to pass from the mains electricity network to the consumers network.

4. An anti-tamper block for an electrical supply installation, the anti-tamper block comprising conductors projecting from the block for carrying electrical power supply current there being a filter enclosed within the block for inhibiting passage of communications signals in the conductors.

5. An anti-tamper block according to claim 4 constructed as a sealed unit, the filter being completely and permanently enclosed within it.

6. Communications apparatus substantially as any one embodiment herein described with reference to Figure 3 of the accompanying drawings.

7. An anti-tamper block substantially as any one embodiment herein described with reference to Figure 3 of the accompanying drawings.
